(19) Europäisches Patentamt
European Patent Office
Office européen des brevets

(11) Publication number: 0 079 389
A1

(12) EUROPEAN PATENT APPLICATION
published in accordance with Art. 158(3) EPC

(21) Application number: 82901443.0

(22) Date of filing: 18.05.82

Data of the international application taken as a basis:

(86) International application number:
PCT/JP82/00180

(87) International publication number:
WO82/04053 (25.11.82 82/28)

(51) Int. Cl.[3]: C 08 F 4/60
C 08 F 6/24, C 08 F 10/06

(30) Priority: 18.05.81 JP 75566/81

(43) Date of publication of application:
25.05.83 Bulletin 83/21

(84) Designated Contracting States:
DE FR GB

(71) Applicant: SUMITOMO CHEMICAL COMPANY, LIMITED
15 Kitahama 5-chome Higashi-ku
Osaka-shi Osaka-fu(JP)

(72) Inventor: SHIGA, Akinobu
7-6, Hoshigoe-Cho Niihama-Shi
Ehime 792(JP)

(72) Inventor: KAKUGO, Masahiro
11-31, Maeda-cho Niihama-shi
Ehime 792(JP)

(72) Inventor: FUKUI, Yoshiharu
6-18, Maeda-cho Niihama-shi
Ehime 792(JP)

(72) Inventor: NAITO, Yukio
2-6-448, Ikku-cho, Niihama-shi
Ehime 792(JP)

(72) Inventor: WAKAMATSU, Kazuki
1-4-10, Wakamizu-cho Niihama-shi
Ehime 792(JP)

(72) Inventor: SUZUKI, Takatoshi
2-6-332, Ikku-cho Niihama-shi
Ehime 792(JP)

(74) Representative: Diamond, Bryan Clive et al,
Gee & Co. Chancery House Chancery Lane
London WC2A 1QU(GB)

(54) **PROCESS FOR PRODUCING PROPYLENE POLYMER OR COPOLYMER.**

(57) A process for homopolymerizing propylene or copolymerizing propylene with other unsaturated hydrocarbon, which comprises conducting polymerization in liquid-phase propylene using a catalyst system composed of a transition metal or the complex thereof, an organoaluminum compound, and an electron donor supported on magnesium halide, contacting the resulting polymerization slurry with a $C_{3-8}$ alcohol and liquid-phase propylene in a countercurrent washing tower to deactivate the catalyst and remove a soluble polymer and the catalyst in the polymerization slurry. This process enables to simplify the production steps, and the catalyst shows a large initial activity and such a high efficiency that the polymer yield per carrier weight is high. The resulting polymer has high purity and has a sufficient stereospecificity and excellent rigidity and filming properties.

./...

EP 0 079 389 A1

Croydon Printing Company Ltd

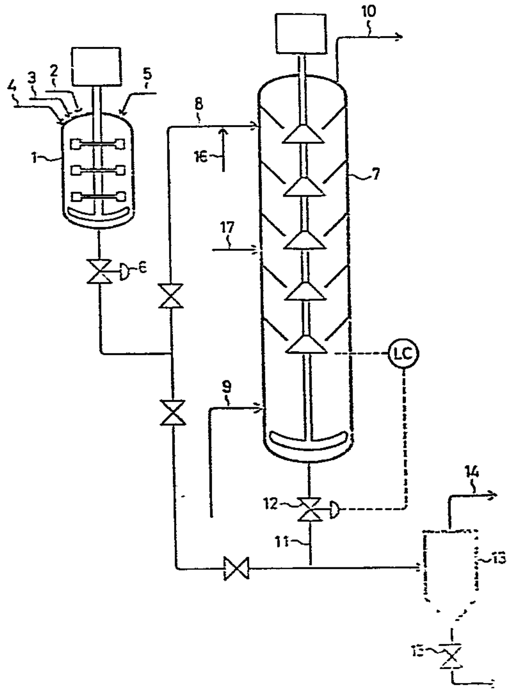

10
5
4
3
2
8
1
16
7
17
LC
9
14
12
11
13
15

TITLE MODIFIED
see front page

# PROCESS FOR THE PRODUCTION OF PROPYLENE POLYMERS OR COPOLYMERS

## TECHNICAL FIELD

The present invention relates to a process for industrially advantageously producing propylene polymers or copolymers by polymerizing or copolymerizing propylene in liquid phase propylene using a catalyst system comprising a solid catalytic component composed of a transition metal compound or a composite substance thereof with an electron donative compound, supported on a magnesium halide; an organoaluminum compound; and an electron donor.

## BACKGROUND ART

Polymerization of propylene in liquid propylene using a catalyst system comprising titanium trichloride and diethylaluminum chloride is conventionally carried out. This method, however, suffers from serious disadvantage that a large amount of a catalytic residue containing titanium and chlorine remains in polypropylene because the catalytic activity per solid catalyst is low, particularly the yield of polypropylene per titanium atom is very low.

The use of a catalytic system comprising a titanium halide supported on a magnesium halide, an organoaluminum compound, and an electron donor in the



BAD ORIGINAL

polymerization of propylene sufficiently increases the yield of polypropylene per titanium atom. The amount of the titanium component contained in the polypropylene is, therefore, very small to an extent that the polypropylene can be used as a commercial product as it is. However, since the yield of polypropylene per magnesium halide used as a carrier is small, there is contained a very large amount of a catalytic residue resulting from the magnesium halide, organoaluminum compound and the like. Hence, the use of such polypropylene without purification gives rise to problems, e.g., corrosion of a molding machine which is ascribable to the halogen at the molding. Thus, a purification step is essential to such an extent as to be required for the conventional titanium trichloride catalyst.

In order to increase the yield of polypropylene per magnesium halide carrier, propylene is polymerized or copolymerized in liquid phase propylene (hereinafter referred to as "bulk polymerization").

In comparison with the polymerization slurry produced using conventional suspension (or solvent) polymerization (referred to as "conventional solvent polymerization" hereinafter) in which the polymerization is generally carried out in a liquid phase saturated hydrocarbon solvent having 5 or more, preferably 5 to 7,

carbon atoms, the polymerization slurry obtained in bulk polymerization is quite advantageous in that separation of the polymer produced from the solvent can be carried out very easily by merely subjecting the polymerization slurry to reduced pressure because the unsaturated hydrocarbon monomers (mainly propylene) used as a polymerization solvent have such a high vapor pressure that they are easily vaporized.

In general, however, polymers obtained by this process have some disadvantages because they contain large amounts of (1) polymers soluble in boiling n-heptane and (2) catalyst residues. Accordingly, the polymers obtained by such process have poorer physical properties, as described hereinafter.

As to polymers (1) soluble in boiling n-heptane, when bulk polymerization is carried out, for example, with a titanium halide catalyst supported on a magnesium halide, the produced polymer contains about 85 to 95% by weight of boiling n-heptane-insoluble polymer.

Such polymers containing large amounts of boiling n-heptane-soluble polymers have poorer physical properties, particularly stiffness and tackiness. Therefore, these polymers can be used for molding but they are not suitable for films and fibers requiring relatively good physical properties.

As to the catalyst residues (2), on the other hand, a reduction in the amount of the catalyst residue in bulk polymerization is inherently possible, since the polymerization has a high polymerization rate and can be operated at a high level of catalyst efficiency as compared with conventional solvent polymerization. However, a relatively large amount of organoaluminum compounds must be used in order to maintain high levels of catalyst efficiency and selectivity. As a result, when large amounts of the organoaluminum compound remain as a catalytic residue, the polymers have a markedly reduced stability, and are easily degraded by heat, thus resulting in foaming and coloration. Consequently, such polymers cannot be used when high quality is desired. Moreover, the yield of polypropylene per magnesium halide carrier is not sufficiently large to the extent that the removal of magnesium halide contained in polypropylene is not required at all.

In order to obtain high quality propylene polymers, therefore, the boiling n-heptane-soluble polymers and catalyst components remaining as residue must be removed.

In connection with the purification of polypropylene obtained in a titanium halide catalyst system supported on a magnesium halide, Japanese Patent Application (OPI) No. 45081/75 discloses that the polypropylene as a suspension in a hydrocarbon solvent is treated with an aliphatic alcohol having 3 to 8 carbon atoms, and thereafter, the solvent is separated to remove catalytic residues and non-isotactic polymers. In this method, however, the two steps of treatment with alcohols and separation are needed, and further, the removal of catalytic residues is not sufficient. Japanese Patent Application (OPI) No. 65591/77 discloses a method for treating with hydroxy ether and then washing with water. Japanese Patent Application (OPI) No. 69488/77 discloses a method for contacting with aromatic monocarboxylic acids or hydroxycarboxylic acids. Japanese Patent Application (OPI) No. 147508/80 discloses a method for treating with carboxylic anhydrides. These methods, however, have disadvantages in that no sufficient removing effect can be obtained unless a large amount of treating agent is used, and further, the use of such specific treating agents increases the cost of purification step. Japanese Patent Application (OPI) Nos. 106785/78 and 142290/79 disclose a method in which after polymerization in liquefied propylene, polyethylene glycol monoalkyl ether, polyethylene glycol monoalkylphenyl ether, or glycol monoether is thrown to achieve deactivation, followed by countercurrently washing with

liquefied propylene. This method, however, has disadvantages in that specific ethers are used as a treating agent, the amount of catalytic residue in the polymer after the de-ashing treatment, particularly the residual amount of chlorine is very large, resulting in rendering the efficiency of de-ashing treatment insufficient, and production costs are increased because the process includes the two steps of deactivation and de-ashing treatments.

Japanese Patent Application (OPI) Nos. 105587/78 and 38306/81 disclose a method in which propylene or propylene and other unsaturated hydrocarbon monomer are polymerized in liquid phase propylene using a catalyst system comprising titanium trichloride prepared by reducing titanium tetrachloride with an organoaluminum compound followed by activation and an organoaluminum compound, and the polymerization slurry is withdrawn from the reactor, followed by treating with alcohols or a mixture of alcohol and epoxide in a countercurrent type washing tower to remove the catalyst. Even in this method, there remains a large amount of catalytic residue composed mainly of titanium in the polypropylene.

DISCLOSURE OF INVENTION

The present inventors paid an attention to the above-described various problems and extensively invenstigated to provide a process for industrially advantageously producing propylene polymers which are reduced in the amounts of boiling n-heptane-soluble polymers and catalytic residues as much as possible.

Namely, the present invention relates to a process for producing propylene polymers or copolymers comprising homopolymerizing propylene, or copolymerizing propylene with other unsaturated hydrocarbon monomer, the process is characterized by:

1) using a catalyst system comprising:

(A) a solid catalytic component composed of a transition metal compound or a composite substance thereof with an electron donative compound, supported on a magnesium halide,

(B) an organoaluminum compound, and

(C) an electron donor,

2) carrying out the polymerization of propylene or copolymerization of propylene with other unsaturated hydrocarbon monomer in liquid phase propylene, and

3) introducing the polymerization slurry produced into an upper portion of a countercurrent type washing tower to effect countercurrent contact with an alcohol having 3 to 8 carbon atoms fed into a part of the washing tower and liquid phase propylene fed into a lower portion thereof, whereby the

catalyst in the washing tower is deactivated and, simultaneously, the propylene polymers or copolymers dissolved in the polymerization slurry and the catalyst are removed.

The process of the invention has the following characteristics:

(1) Compared with the conventional titanium trichloride catalyst systems, the catalytic efficiency of the solid catalytic component (A) per solid catalyst and per titanium atom is very high. Transition metal (titanium) and halogen residues, therefore, which reduce the physical properties of the ultimate product, such as hue, heat stability, corrosive properties, foaming properties, etc., remain in the formed polymer only in very reduced amounts. Hence, the step of removing catalytic residues can be simplified.

(2) Because of high activity as described above, there can be obtained sufficiently high stereoregularity. Namely, the amount of amorphous polymer formed which is of low industrial value and remains in the formed polymer, decreasing the mechanical properties and physical properties, such as film blocking properties, is small.

(3) The initial activity of the solid catalytic component system (A) is very high as compared with that of the conventional titanium trichloride catalyst systems.



BAD ORIGINAL

Accordingly, the residence time in a polymerization vessel can be shortened to thereby increase productivity.

(4) During the production of polymer, polymer particles less deposit on a reactor, pipes, and the like. The operation, therefore, can be performed stably over long periods of time.

(5) Since the deactivation, washing and removal of the catalyst, and the washing and removal of the soluble polymer are performed at the same time, various steps can be simplified.

(6) Alcohols which are used as treating agents are inexpensive. Furthermore, since the yield of polypropylene produced per carrier is very large, the amount of alcohol used can be greatly decreased as compared with the conventional methods. The process of the invention, therefore, is very economical.

(7) Since the polymerization is performed in liquid phase propylene, the yield of polypropylene per titanium atom and per solid catalyst is greatly increased. Therefore, there can be obtained polypropylene having a greatly decreased amount of catalytic residue, resulting in solving problems such as hue, heat stability, odor, and so forth of polypropylene product.

(8) Since the content of soluble polymers in the polypropylene product is greatly decreased by the



BAD ORIGINAL

propylene-washing, the product is excellent in stiffness and film properties.

In the present invention, the solid catalytic component (A) used in the production of propylene polymers or copolymers comprises a transition metal compound or a composite substance thereof with an electron donative compound, supported on a magnesium halide.

Magnesium halide may contain aluminum, silicon, etc., as long as it is a compound containing therein 1 to 2 halogen atoms, and can be those synthesized by any method. Chlorine is preferred as the halogen atom.

As the transition metal compound, titanium compounds and/or vanadium compounds are preferred, and halides, alkoxyhalides, oxides, and halogenoxides of titanium and/or vanadium can be exemplified. Among them, halides, alkoxyhalides and halogenoxides of optional divalent to tetravalent titanium are preferred.

As the electron donative compound, amines, amides, ethers, alcohols, phenols, esters, ketones, nitriles, phosphines, phosphites, and sulfides can be exemplified, with the ethers, alcohols, phenols and esters being preferred. These electron donative compounds may be used in combination.



BAD ORIGINAL

While the solid catalytic component (A) is synthesized by known methods, any solid catalytic component synthesized by any method can be used unless it is particularly inferior in catalytic activity and stereoregularity, and there should be no particular limitations thereto. Methods of synthesizing the solid catalytic component (A) as used herein are described in, for example, Japanese Patent Publication No. 41676/72, Japanese Patent Application (OPI) Nos. 16986/73, 108385/75, 92885/76, 151691/77, 176/78, 2580/78, 21093/78, 43094/78, 108088/78, 123488/78, 146292/78, 2292/79, 2988/79, 4294/79, 5893/79, 17988/79, 112983/79, 119586/79, 133408/80 and 30407/81, and further, in Japanese Patent Application Nos. 136072/80 and 136073/80.

It is preferred in the invention that the solid catalytic component (A) has high activity and stereoregularity, and further, that polymer particles obtained are in a spherical or long spherical form and are uniform in grain size. In washing with liquid phase propylene in the countercurrent type washing tower, it is particularly important that the polymer particles are in a spherical or long spherical form and have a narrow grain size distribution. Since the polymer particles are similar to the solid catalyst particles, it is preferred for the grain size distribution of the solid catalytic

component (A) that the proportion of particles having a grain size which is 25% or less of the mean grain size (50% value of the cumulative weight distribution) is 5% by weight or less, preferably 2% by weight or less, and that the proportion of particles having a grain size which is 250% or more of the mean grain size is 5% by weight or less, preferably 2% by weight or less. As a preferred example of such solid catalytic components (A) is a solid catalytic component which is prepared by catalytically reacting (a) a solid product and (b) a titanium compound as described hereinafter in an inert solvent.

(a) Solid product which is obtained by reacting an organomagnesium compound with at least one of the following halogen-containing compounds (I) and (II):

(I) Silicon halogenide compound represented by the general formula:

$$R_nSiX_{4-n}$$

(wherein R is a hydrocarbon group having from 1 to 8 carbon atoms, X is a halogen atom, and n is a number expressed by $0 \leq n < 4$)

(II) Aluminum halide compound represented by the general formula:

$R_{\ell}A\ell X_{3-\ell}$

(wherein R is a hydrocarbon group having from 1 to 8 carbon atoms, X is a halogen atom, and $\ell$ is a number expressed by $0 \leqq \ell < 3$),

(b) Titanium compound containing a bond between titanium and a phenoxy group or substituted phenoxy group, and a bond between titanium and halogen.

Organomagnesium compounds used in the reaction with the silicon halogenide compound and/or the aluminum halide compound are generally prepared by reacting organohalogenide compounds and metallic magnesium. Though any type of organomagnesium compounds can be used, Grignard compounds represented by the general formula: RMgX (wherein R is a hydrocarbon group having from 1 to 8 carbon atoms, and X is a halogen atom) and dialkylmagnesium compounds represented by the general formula: RR'Mg (wherein R and R' are a hydrocarbon group having from 1 to 8 carbon atoms) are preferably used.

Examples of Grignard compounds include ethylmagnesium chloride, n-propylmagnesium chloride, n-butylmagnesium chloride, isoamylmagnesium chloride, allylmagnesium chloride, phenylmagnesium chloride, n-butylmagnesium bromide, ethylmagnesium iodide, and the like. Particularly preferred are organomagnesium chlorides

which are synthesized from organic chlorides such as n-propylmagnesium chloride, n-butylmagnesium chloride, etc.

Examples of dialkylmagnesium compounds include diethylmagnesium, di-n-propylmagnesium, di-n-butylmagnesium, di-n-hexylmagnesium, n-butylethylmagnesium, diphenylmagnesium, and the like.

These organomagnesium compounds are synthesized as a uniform solution or a suspension in the presence of an ether compound solvent such as diethyl ether, di-n-propyl ether, di-n-butyl ether, diisoamyl ether, tetrahydrofuran, etc., or a hydrocarbon compound solvent such as hexane, heptane, octane, cyclohexane, benzene, toluene, xylene, etc., or a mixed solvent of ether and hydrocarbon compounds, and then used. The presence of an ether compound solvent is preferred. In this case, the ether compound is preferably used in an amount of from 0.1 to 10 moles, preferably from 0.5 to 5 moles, per mole of the organomagnesium compound.

Silicon halogenide compounds represented by the general formula: $R_nSiX_{4-n}$ (wherein R is a hydrocarbon group having from 1 to 8 carbon atoms, X is a halogen atom, and n is a number expressed by $0 \leq n < 4$) used in the reaction with organomagnesium compounds include all the compounds containing a silicon-halogen bond. Preferred are those compounds in which the number of halogen

atoms is large. Suitable examples include silicon tetrachloride, silicon tetrabromide, methylsilyl trichloride, dimethylsilyl dichloride, trimethylsilyl chloride, ethylsilyl trichloride, n-propylsilyl trichloride, n-butylsilyl trichloride, methylsilyl tribromide, vinylsilyl trichloride, phenylsilyl trichloride, and the like, with silicon tetrachloride being particularly preferred.

Further, aluminum halide compounds represented by the general formula: $R_{\ell}A\ell X_{3-\ell}$ (wherein R is a hydrocarbon group having from 1 to 8 carbon atoms, X is a halogen atom, and $\ell$ is a number expressed by $0 \leqq \ell < 3$) used in the reaction with organomagnesium compounds are all the compounds containing an aluminum-halogen bond. Suitable examples include anhydrous aluminum chloride, anhydrous aluminum bromide, ethylaluminum dichloride, n-propylaluminum dibromide, diethylaluminum chloride, n-propylaluminum chloride, methylaluminum sesquichloride, ethylaluminum sesquichloride, and the like, with anhydrous aluminum chloride, ethylaluminum dichloride, diethylaluminum chloride, and ethylaluminum sesquichloride being particularly preferred.

The reaction between organomagnesium compounds and silicon halogenide compounds and/or aluminum halide compounds is performed within a temperature range of from -50 to 150°C, preferably from -30 to 100°C.

Solvents used in this reaction include aliphatic hydrocarbon compounds such as n-pentane, n-hexane, n-heptane, n-octane, n-decane, etc.; aromatic hydrocarbon compounds such as benzene, toluene, xylene, etc.; alicyclic hydrocarbon compounds such as cyclohexane, methylcyclohexane, etc.; ether compounds such as diethyl ether, di-n-propyl ether, diisopropyl ether, di-n-butyl ether, diisoamyl ether, tetrahydrofuran, dioxane, etc.; and mixtures of the hydrocarbon compounds and ether compounds as described above.

As specific reaction methods, a method for adding dropwise the halogen-containing compound or a solution of the halogen-containing compound in the above-described solvent to a solution of the organomagnesium compound, or vice versa is employed. The reaction time is 10 minutes or more, preferably from 30 minutes to 10 hours. The molar ratio of the organomagnesium compound to the halogen-containing compound is from 1:10 to 10:1, preferably from 1:2 to 2:1. The thus-obtained solid product (a) is allowed to stand, freed of the supernatant liquid, and fully washed with a purified inert hydrocarbon solvent such as pentane, hexane, heptane, octane, benzene, xylene, cyclohexane, methylcyclohexane, decalin, etc. Thereafter, after being dried or without being dried, it is sent to the subsequent step.

The solid product contains from 0.1% by weight to several percent by weight of an Si atom and/or an Aℓ atom, and from 10 to 60% by weight of an ether compound.

The X-ray diffraction pattern of the solid product is completely different from that of magnesium chloride, and it can therefore be seen that it is a novel magnesium-containing solid.

The solid product (a) obtained as above is sent to the subsequent contact step with a titanium compound (b). Prior to this, the solid product can be treated by contacting with an electron donative compound.

Electron donative compounds include amines, amides, alcohols, phenols, ethers, esters, ketones, nitriles, phosphines, phosphites, sulfides, and the like, with the ester compounds being preferred. Examples of the ester compounds include aliphatic carboxylic acid esters, alicyclic carboxylic acid esters, aromatic carboxylic acid esters, and the like. Of these compounds, olefinic carboxylic acid esters and aromatic monocarboxylic acid esters are preferred, with the aromatic monocarboxylic acid esters being particularly preferred. Suitable examples include methyl benzoate, ethyl benzoate, ethyl p-anisate, etc.

The amount of the electron donative compound used is from $10^{-5}$ to 0.1 mole, preferably from $5 \times 10^{-4}$ to 0.02 mole, per gram of the solid product. When the

amount is less than $10^{-5}$ mole, the effect of improving the stereoregularity is poor, whereas when it is more than 0.1 mole, the polymerization activity is seriously decreased.

The contact of the solid product with the electron donative compound can be performed by any known techniques such as a slurry method and a mechanical pulverization method using a ball mill. In particular, the slurry method in which the both are contacted in the presence of a diluent is advantageous in respect of particle shape and grain size distribution.

Diluents include aliphatic hydrocarbons such as pentane, hexane, heptane, octane, etc., aromatic hydrocarbons such as benzene, toluene, xylene, etc., and alicyclic hydrocarbons such as cyclohexane, cyclopentane, etc.

The amount of the diluent used is from 0.1 to 1,000 mℓ, preferably from 1 to 100 mℓ, per gram of the solid product. The reaction temperature is from -50 to 150°C, preferably from 0 to 100°C. The reaction time is 10 minutes or more, preferably from 30 minutes to 3 hours.

After the contact treatment with the electron donative compound, it may be washed with an inert hydrocarbon solvent, etc., or may be sent to the subsequent contact reaction step with the titanium compound without being washed.

The contact treatment with the electron donative compound increases the activity and the stereospecificity of the resulting solid catalyst to some extent. The catalyst of the invention, however, exhibits sufficiently high activity and stereospecificity even though it is not contacted with the above-described electron donative compound.

The titanium compound (b) as used in this invention is a compound containing a bond between titanium and a phenoxy or substituted phenoxy group, and a bond between titanium and halogen. In the present invention, the titanium compound also includes a mixture of a plurality of titanium-containing compounds.

Titanium is preferably tetravalent although it takes any atomic valency of from 2 to 4.

Preferred titanium compounds are those represented by the general formula: $Ti(OAr)_nX_{4-n}$ (wherein OAr is a phenoxy or substituted phenoxy group, X is a halogen atom, and n is a number expressed by $0 < n < 4$).

Halogen X includes chlorine, bromine, and iodine, with chlorine being preferred.

Examples of substituents for the substituted phenoxy group OAr include hydrocarbon groups such as an alkyl group, an aryl group, etc., oxygen-containing organic groups such as an alkoxy group, an aryloxy group,

an acyl group, an ester group, etc., sulfur-containing organic groups such as an alkylthio group, an arylthio group, etc., nitrogen-containing groups such as an amino group, an alkylamino group, an arylamino group, a nitro group, a cyano group, etc., halogens, and the like. It may have a plurality of substituents.

Preferred substituents are a hydrocarbon group, a halogen, an alkoxy group, and an aryloxy group. Specific examples of the substituted phenoxy group OAr include a p-methylphenoxy group, a p-ethylphenoxy group, a p-isopropylphenoxy group, a p-t-butylphenoxy group, a p-phenylphenoxy group, a β-naphthyl group, a 2-naphthyloxy group, a p-chlorophenoxy group, a p-bromophenoxy group, a p-iodophenoxy group, a p-methoxyphenoxy group, a p-ethoxyphenoxy group, a p-phenoxyphenoxy group, a 4-methyl-2-t-butylphenoxy group, an o-methylphenoxy group, an o-t-butylphenoxy group, an o-phenylphenoxy group, a 1-naphthyl group, an o-chlorophenoxy group, an o-methoxyphenoxy group, an o-phenoxyphenoxy group, an m-methylphenoxy group, an m-chlorophenoxy group, and the like.

Of these, hydrocarbylphenoxy groups, e.g., a p-methylphenoxy group, an o-phenylphenoxy group, etc., are preferred.

The number n is preferably $0 < n < 2$, more preferably $0 < n < 1$, most preferably $0.02 \leq n \leq 0.8$.

The use of such specific titanium compounds greatly increases the activity and stereospecificity as compared with the case of contacting with a corresponding titanium halide, or the case of contacting a carrier contact treated with phenol with the titanium halide.

The titanium compounds can be synthesized by known techniques. One method is that a corresponding halogen-containing titanium compound and phenol are subjected to a replacement reaction. Another method is to use a reaction product by disproportionation reaction of an orthotitanic acid ester of phenol or a substituted phenol and a corresponding halogen-containing titanium compound.

Halogen-containing titanium compounds used in the above-described synthesis include titanium tetrahalides such as titanium tetrachloride, titanium tetrabromide, etc., and halogenated titanates such as methoxytitanium trichloride, ethoxytitanium trichloride, etc. Of these, titanium tetrahalides, particularly titanium tetrachloride, are preferred.

Inert solvents used for the titanium compound solution include aliphatic hydrocarbons such as hexane, heptane, octane, fluid paraffin, etc., alicyclic hydrocarbons such as cyclohexane, methylcyclohexane, etc., aromatic hydrocarbons such as benzene, toluene, xylene,

etc., aliphatic halogenated hydrocarbons such as methylene chloride, trichloroethane, trichloroethylene, etc., and aromatic halogenated hydrocarbons such as chlorobenzene, dichlorobenzene, trichlorobenzene, etc., and the like. Mixed solvents of these can also be used. Of these, aromatic hydrocarbons and/or halogenated hydrocarbons are preferred, particularly aromatic halogenated hydrocarbons.

The concentration of the titanium compound is from 0.05 to 0.9% by volume, preferably from 0.1 to 0.7% by volume.

When the solid product is contact treated with the specific titanium compound in the presence of the inert solvent, particularly as a solution thereof having the above-described concentration range, the catalytic activity and stereospecificity more greatly increase as compared with not only the case of contacting with titanium halide but also the case of contact treating in the absence of the solvent.

Although the solid product (a) which has been or has not been contact treated with the electron donative compound can be contact reacted with the titanium compound (b) by other known techniques such as a pulverization method using a ball mill, a vibration mill or the like, it is preferred to employ the slurry

method in which the solid product is added to the titanium compound solution to form a slurry, or a method in which the solid product is impregnated with the titanium compound solution, so as not to deteriorate the excellent particle characteristics of the solid product.

The amount of the titanium compound solution used is from 0.1 to 100 mℓ, preferably from 0.5 to 50 mℓ, per gram of the solid product.

The contact reaction is preferably performed at a temperature of from 0 to 150°C.

The reaction time is several minutes or more, preferably from 30 minutes to 3 hours.

After the contact reaction, it is preferred to fully wash with an inert solvent. Thus, the solid catalyst (A) of the invention is obtained.

As the catalytic component (B) as used in the invention, an organoaluminum compound represented by the general formula: $R^2_mAℓY_{3-m}$ (wherein $R^2$ is a straight chain alkyl group, a branched chain alkyl group, an alicyclic hydrocarbon group, or an aromatic hydrocarbon group, each having 1 to 8 carbon atoms, Y is a halogen or hydrogen, and m is a number expressed by $2 \leqq m \leqq 3$) is preferred.

Specific examples of the organoaluminum compounds include trialkylaluminum, a mixture of trialkylaluminum and dialkylaluminum halide, and dialkylaluminum

hydride, with triethylaluminum and a mixture of triethylaluminum and diethylaluminum chloride being suitably used.

The molar ratio of the titanium atom in the solid catalyst to the activation agent used in the polymerization of α-olefins can be chosen from the broad range of from 10:1 to 1:100, with the range of from 2:1 to 1:600 being suitably used.

The process of the invention is to polymerize or copolymerize an α-olefin in the presence of the above-described solid catalyst (A) and activation agent (B). Preferably a known electron donor (C) is further added to the above-described system.

Addition of the electron donor generally increases the stereospecificity although it decreases the catalytic activity.

Electron donors include amines, amides, phenols, ethers, ketones, nitriles, phosphines, phosphites, sulfides, and the like. Of these, ester compounds are preferred, with esters of olefinic carboxylic acids or aromatic monocarboxylic acids being particularly preferred. Specific examples include methyl methacrylate, ethyl benzoate, ethyl p-anisate, methyl p-toluylate, etc. The molar ratio of the titanium atom in the solid catalyst to the electron donor is from 10:1 to 1:500, preferably from 2:1 to 1:200.

In the present invention, when the copolymerization of propylene is performed, the other unsaturated hydrocarbon monomers used mean all monomers copolymerizable with propylene by the catalyst as used in the invention. Specifically, α-olefins such as ethylene, butene-1, 4-methylpentene-1, hexene-1, octene-1, etc., are generally used. These can be also used in combination with two or more.

The proportion of the comonomer fed is optional within the range that the copolymers produced keep a solid particle form thereof.

Alcohols used in the invention include aliphatic alcohols and alicyclic alcohols, each having from 3 to 8 carbon atoms. Examples are n-propanol, isopropanol, n-butanol, sec-butanol, tert-butanol, n-amyl alcohol, sec-amyl alcohol, cyclopentanol, n-hexanol, 1-methylpentanol, 2-methylpentanol, 1-ethylbutanol, cyclohexanol, 2-methylcyclopentanol, n-heptanol, 2-methylcyclohexanol, 2-methylhexanol, n-octanol, 2-ethylhexanol, and the like. In particular, alcohols containing a hydrocarbon group at least at the α- or β-positioned carbon atom relative to the hydroxyl group are excellent in washing and removing the catalyst from the polymer. Preferred are isopropanol, isobutanol, sec-amyl alcohol, cyclohexanol, 2-ethylhexanol, etc.

Although the amount of the alcohol used in the invention should be varied depending on the type and amount of the catalyst used, it is preferred to feed the alcohol to the rising propylene flow in a proportion of from 0.01 to 2.0 moles per liter. Per mole of the organoaluminum compound used, it is preferably from about 0.5 to 15 moles.

Although the process of the invention is simplified as compared with the conventional methods, the amount of the alcohol required is unexpectedly smaller than those for the conventional methods.

The washing and the alcohol treatment can be performed at any temperature at which propylene is maintained in a liquid form and the polymer can hold its solid particle form. In general, it is from 20 to 100°C, preferably from 40 to 80°C.

The washing time is from 3 minutes to 5 hours, preferably from 10 minutes to 2 hours.

## BRIEF DESCRIPTION OF DRAWING

Figure 1 is a schematic view of an example of a process of the invention.

## BEST MODE FOR CARRYING OUT THE INVENTION

The process of the invention will hereinafter be explained with reference to Figure 1.

Into a polymerization vessel 1 are introduced liquid phase propylene through a line 2, an unsaturated hydrocarbon monomer, e.g., ethylene, through a line 3, a molecular weight modifier, e.g., hydrogen, through a line 4, and a catalyst through a line 5.

The polymerization reaction proceeds at a temperature of from 30 to 100°C and at a pressure at which propylene can be kept in a liquid form. The polymerization slurry formed is withdrawn batchwise or preferably continuously from the polymerization vessel 1 through a valve 6, and introduced into a countercurrent type washing tower 7 at an upper portion 8 thereof (hereinafter referred to as "upper feed"). Into the washing tower 7 is introduced liquid phase propylene (preferably fresh propylene) not containing polymers (mainly amorphous polymers) soluble in the polymerization slurry through a line 9 at a lower portion (hereinafter referred to as "lower feed").

An alcohol is introduced as it is or after being diluted with liquid propylene through the line 9, or a line 16, or a line 17.

It is most preferred for the alcohol to be introduced through the line 17 in order to increase its washing effect. Polymers soluble in the polymerization slurry and reaction products between the catalyst and

alcohol remaining in the polymerization slurry are selectively discharged out through an upper overflow line 10, and sent to an apparatus for recovering amorphous polymers. The polymerization slurry countercurrently contacts with the liquid phase propylene from the lower feed in the washing tower 7. A polymer insoluble in the polymerization slurry is selectively withdrawn from a lower valve 11, and when the pressure is reduced to nearly atmospheric pressure by means of a valve 12 interlocked with a level (or concentration) controller LC for the slurry deposited in the lower portion of the tower, it is introduced into a flash tank 13.

The monomers containing mainly liquid phase propylene which are volatile at atmospheric pressure are vaporized in the flash tank 13, discharged out through a line 14, and sent to a purification step.

The polymer separated in the flash tank 13 is sent, as it is or, if necessary, through aftertreatments such as a catalyst decomposition step, to a hopper or granulator through a valve 15.

The structure of the countercurrent washing tower preferably is that as disclosed in Japanese Patent Application (OPI) Nos. 79589/75 and 3679/77 the above-described requirements are met.

The present invention will be described in greater detail by reference to the following examples, which are not, however, to be interpreted as limiting the present invention.

EXAMPLE 1

(1) Preparation of Catalyst

To a butyl ether solution of n-butylmagnesium chloride was added dropwise silicon tetrachloride (molar ratio of magnesium to silicon: 1:1) at 20°C over a period of 4 hours to prepare a solid. Ethyl benzoate was added to the solid in a proportion of 0.80 mℓ per gram of the solid and reacted at 30°C for 1 hour. Then, titanium tetrachloride was added thereto in a proportion of 6 mℓ per gram of the solid and reacted at 120°C for 2 hours to prepare a solid catalyst (A). The mean grain size of the solid catalyst (A) was 14.2 microns. The amount of particles having a grain size of 3.6 microns or less was 0.5% by weight, and the amount of particles having a grain size of 35.5 microns or more was 1.0% by weight.

(2) Polymerization of Propylene and Washing

To a 30 $m^3$ polymerization vessel were continuously fed 2,000 kg/hr liquid propylene, 80 g/hr the above solid catalyst (A), 800 g/hr triethylaluminum, and 400 g/hr methyl p-toluylate in the presence of hydrogen,

and propylene was polymerized by a flow process while maintaining the interior of the vessel at 65°C. The polymerization slurry was discharged out of the polymerization vessel from a lower thereof such that the level in the vessel was maintained constant.

The polymerization slurry discharged under such conditions was composed of 19 kg/hr liquid propylene-soluble by-product, i.e., so-called atactic polymer and 1,030 kg/hr unreacted liquid propylene containing a major portion of aluminum compound fed in addition to 950 kg/hr propylene solid polymer.

The polymer slurry was continuously discharged from the lower portion of the polymerization vessel and sent to an upper portion 8 of a countercurrent type multistage contact washing tower 7 as shown in Figure 1.

Into the washing tower was introduced under pressure 1,040 g/hr isobutanol at a central portion 17 thereof.

Purified liquid phase propylene maintained at 60 to 62°C was continuously introduced into the tower at a lower portion 9 at a flow rate of 1,200 kg/hr, and the stirring in the tower was performed at a very slow speed of 12 rpm. The polymer deposited in the lower portion of the tower was continuously discharged from a reducing valve 12 interlocked with a level controller LC and introduced into a flash tank 13 through a line 11.

From a tower top portion 10 was discharged 1,800 kg/hr liquid phase propylene containing the catalytic components and 19 kg/hr atactic polymer, which was then introduced into a recovery apparatus for the atactic polymer. Loss of the fine powdery solid polymer contained therein was 1% or less. Thus, the slurry discharged from the lower portion of the tower was separated in the flash tank 13, and the purified powdery polymer was obtained from a lower portion thereof.

The countercurrent washing tower as used herein had a diameter of 600 mm and a height of 8,200 mm and included 10 conical rotary plates.

(3) Evaluation of Polymer

The proportion (II%) of the residue extracted by boiling n-heptane was 98.1%. Characteristics of the polymer, such as the corrosiveness onto soft steel, the residual ash content in the polymer as measured by the fluorescent X-ray method, etc., and characteristics of a 30 μ thick film which was produced by extruding the polymer with a phenol based antioxidant added from a 40 mm ϕ T-die extruder at a die temperature of 280°C are shown in Table 1. All the MgO, $TiO_2$, $A\ell_2O_3$ and $C\ell$ contents were markedly low, and the hue of the film was good.

Moreover, the corrosiveness was markedly low as compared with the practically allowable limit of 1.2 and improved to such an extent that it was not necessary to neutralize by adding fatty acid metal salts.

EXAMPLE 2

(1) Preparation of Catalyst

To a butyl ether solution of n-butylmagnesium chloride was added dropwise silicon tetrachloride (molar ratio of magnesium to silicon: 1:1) at 20°C over a period of 3 hours to prepare a white solid. Ethyl benzoate was added to the solid in a proportion of 3 mℓ per gram of the solid and reacted at 30°C for 1 hour to obtain a solid carrier.

Titanium tetrachloride and phenol were added to monochlorobenzene in the proportion that the amount of the phenol was 12.8 g per 30 mℓ of the titanium tetrachloride, and they were reacted at 120°C for 1 hour. The solid carrier was then added thereto and reacted at 120°C for 1 hour to prepare a solid catalyst (B).

(2) Polymerization of Propylene, Washing, and Evaluation of Polymer

Propylene was polymerized in a 30 $m^3$ polymerization vessel using the solid catalyst (B). The polymerization conditions, polymerization results, washing results, physical properties of the polymer, etc., are shown in Table 1.

## EXAMPLE 3

The procedure of Example 1 was repeated except that the amount of isobutanol used in Example 2 was changed.

The polymerization results, physical properties of the polymer, etc., are shown in Table 1.

## COMPARATIVE EXAMPLE 1

(1) Preparation of Catalyst

1) Preparation Method (I) (Preparation of Reduction product)

A 200-liter reactor was purged with argon, and 40 ℓ dry hexane and 10 ℓ titanium tetrachloride were thrown thereinto. To this solution maintained at -5°C was added dropwise a solution consisting of 30 ℓ dry hexane and 23.2 ℓ ethylaluminum sesquichloride under such conditions that the temperature of the reaction system was maintained at -3°C or lower. At that temperature, stirring was continued for 2 hours. After the reaction, the reduction product obtained by standing was separated and washed twice with 40 ℓ hexane to obtain 16 kg of a reduction product.

2) Preparation Method (II)

The reduction product as obtained in Preparation Method (I) was added to n-decalin to form a slurry. The slurry, after being adjusted in concentration to

0.2 g/cc, was heat-treated at 140°C for 2 hours. After the reaction, the supernatant was withdrawn, and washing with 40 ℓ hexane was performed twice to obtain a titanium trichloride composition.

3) Preparation Method (III)

The titanium trichloride composition (11 kg) as obtained in Preparation Method (II) was added to 55 ℓ toluene to form a slurry. Iodine and isoamyl etner were thrown thereinto in such a manner that the molar ratio of titanium trichloride composition to $I_2$ to diisoamyl ether was 1:0.1:1.0, and reacted at 80°C for 1 hour to obtain a titanium trichloride solid catalyst.

(2) Polymerization of Propylene, Washing and Evaluation of Polymer

Propylene was polymerized in the same manner as in Example 1 except that into a 30 $m^3$ polymerization vessel were fed 1,500 kg/hr liquid propylene, 40 g/hr titanium trichloride solid catalyst, and 600 g/hr diethylaluminum chloride, the polymerization of propylene was performed at 70°C, and that the amount of isobutanol used was changed. Polymerization results, washing results and physical properties of polymer are shown in Table 1.

TABLE 1

| | Example 1 Solid Catalyst (A) | Example 2 Solid Catalyst (B) | Example 3 Solid Catalyst (B) | Comparative Example 1 Titanium Trichloride Solid Catalyst |
|---|---|---|---|---|
| Catalyst System | | | | |
| Amount of Solid Catalyst Component Fed (g/hr) | 60 | 50 | 50 | 40 |
| Amount of Aluminum Component Fed (g/hr) | 800 | 600 | 600 | 600 |
| Amount of Methyl p-Toluylate Fed (g/hr) | 400 | 300 | 300 | -- |
| Treating Agent | | | | |
| Treating Agent | Isobutanol | Isobutanol | Isobutanol | Isobutanol |
| Amount of Treating Agent Fed (g/hr) | 1,040 | 580 | 390 | 740 |
| Polymerization Results | | | | |
| Solid Polymer in Polymerization Slurry (kg/hr) | 950 | 940 | 940 | 600 |
| Soluble Matter in Polymerization Slurry (kg/hr) | 19 | 16 | 16 | 12 |

(cont'd)

| | Example 1<br>Solid Catalyst (A) | Example 2<br>Solid Catalyst (B) | Example 3<br>Solid Catalyst (B) | Comparative Example 1<br>Titanium Trichloride Solid Catalyst |
|---|---|---|---|---|
| Characteristics of Polymer | | | | |
| T-Ash (ppm) | 18 | 14 | 16 | 48 |
| MgO (ppm) | 8 | 7 | 8 | — |
| $TiO_2$ (ppm) | 1 or less | 1 or less | 1 or less | 23 |
| $Al_2O_3$ (ppm) | 5 | 2 | 3 | 13 |
| Cl (ppm) | 14 | 13 | 14 | 35 |
| Film Characteristics | | | | |
| Haze (%) | 2.3 | 2.3 | 2.3 | 2.3 |
| Blocking ($g/100\ cm^2$) | 16 | 15 | 16 | 16 |
| Young Modulus ($kg/cm^2$) | 6,700 | 6,800 | 6,800 | 6,800 |
| Hue | Good | Good | Good | Yellowish |

CLAIM

A process for producing propylene polymers or copolymers comprising homopolymerizing propylene, or copolymerizing propylene with other unsaturated hydrocarbon monomer, the process is characterized by:

1) using a catalyst system comprising:

(A) a solid catalytic component composed of a transition metal compound or a composite substance thereof with an electron donative compound, supported on a magnesium halide,

(B) an organoaluminum compound, and

(C) an electron donor,

2) carrying out the polymerization of propylene or copolymerization of propylene with other unsaturated hydrocarbon monomer in liquid phase propylene, and

3) introducing the polymerization slurry produced into an upper portion of a countercurrent type washing tower to effect countercurrent contact with an alcohol having 3 to 8 carbon atoms fed into a part of the washing tower and liquid phase propylene fed into a lower portion thereof, whereby the catalyst in the washing tower is deactivated and simultaneously, the propylene polymers or copolymers dissolved in the polymerization slurry and the catalyst are removed.

0079389

1/1

FIG. 1

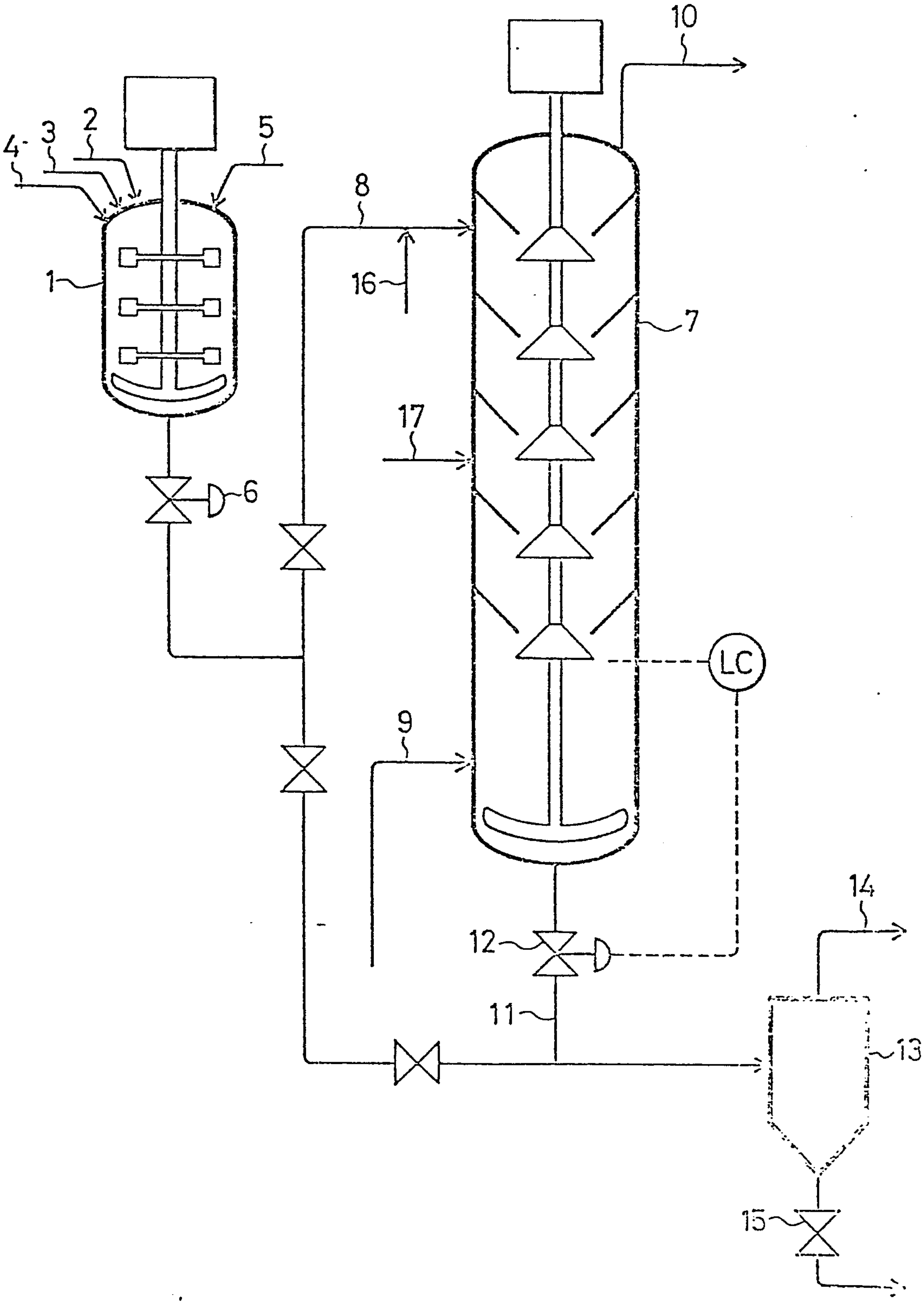

# INTERNATIONAL SEARCH REPORT

0079389

International Application No. PCT/JP82/00180

**I. CLASSIFICATION OF SUBJECT MATTER** (if several classification symbols apply, indicate all) [3]

According to International Patent Classification (IPC) or to both National Classification and IPC

Int. Cl.[3] C08F 4/60, 6/24, 10/06

**II. FIELDS SEARCHED**

Minimum Documentation Searched [4]

| Classification System | Classification Symbols |
|---|---|
| I P C | C08F 4/60-4/68, 6/00, 6/24, 10/00, 10/04, 10/06 |

Documentation Searched other than Minimum Documentation to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP,A, 54-68889 (Sumitomo Chemical Co., Ltd.), 2. June. 1979 (02.06.79) & US, A, 4,195,145 | 1 |
| Y | JP,A, 51-143091 (Sumitomo Chemical Co., Ltd.), 9. December. 1976 (09.12.76) | 1 |
| Y | JP,A, 54-112983 (Sumitomo Chemical Co., Ltd.), 4. September. 1979 (04.09.79) & US, A, 4,235,984 | 1 |
| A | JP,A, 48-102885 (Mitsui Toatsu Chemicals, Inc.), 12. April. 1973 (12.04.73) | 1 |
| A | JP,A, 54-142290 (Mitsui Toatsu Chemicals, Inc.), 6. November. 1979 (06.11.79) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| July 22, 1982 (22.07.82) | August 2, 1982 (02.08.82) |
| **International Searching Authority** [1] | **Signature of Authorized Officer** [20] |
| Japanese Patent Office | |